# EUROPÄISCHE PATENTSCHRIFT

(11) **EP 1 587 720 B1**
(45) Veröffentlichungstag und Bekanntmachung des Hinweises auf die Patenterteilung: **22.11.2006**
(21) Anmeldenummer: 04706185.8
(22) Anmeldetag: 29.01.2004
(51) Int. Cl.: B60R 21/20

(54) **INNENVERKLEIDUNGSTEIL**
INTERIOR TRIMMING PIECE
ELEMENT DE GARNITURE INTERIEURE

(30) Priorität: 29.01.2003 DE 10304198
(43) Veröffentlichungstag der Anmeldung: 26.10.2005
(73) Patentinhaber: Faurecia Innenraum Systeme GmbH, 76767 Hagenbach (DE)
(72) Erfinder: BRANDSTÄTTER, Albert, 85235 Odelzhausen (DE)
(74) Vertreter: Pfenning, Meinig & Partner GbR
(86) Internationale Anmeldenummer: PCT/EP2004/000803
(87) Internationale Veröffentlichungsnummer: WO 2004/067335

(56) Entgegenhaltungen:
- EP-A- 1 149 742
- EP-A- 1 151 898
- EP-A- 1 219 507
- US-A- 5 738 367
- US-A1- 2002 008 368

## Beschreibung

Die vorliegende Erfindung betrifft ein Innenverkleidungsteil nach dem Oberbegriff des Patentanspruchs 1.

Solch ein Innenverkleidungsteil ist z.B aus der EP 1 149 742 bekannt.

Für solche Innenverkleidungsteile stellt sich insbesondere bei modernen Kraftfahrzeugen die Aufgabe, nicht nur leichtbauend und umweltfreundlich zu sein, sondern auch Durchtrittmöglichkeiten für hinter dem Innenverkleidungsteil angeordnete Airbagmodule bereitzustellen.

So ist ein gattungsgemäßes Innenverkleidungsteil für Kraftfahrzeuge bekannt, welches einen Kunststoffträger sowie ein damit verbundenes, mit einem Scharnierblatt zur zumindest bereichsweisen Überbrückung eines Airbagdurchgangskanal versehenes Metallverstärkungsteil aufweist. Dieses Metallverstärkungsteil ist z.B. ein an den Kunststoffträger angenietetes Blechteil, welches eines definierte Knickkante aufweist, so dass im Fall einer Airbagauslösung diese Knickkante als Scharnier einer Airbagklappe dient, während der Kunststoffträger im Bereich des Airbagkanals aufgerissen wird.

Das Metallteil hat hierbei außerdem die Aufgabe, im Normalbetrieb des Fahrzeuges einen steifen Verschluss des Airbagkanals bereitzustellen.

Nachteilig an sämtlichen im Stand der Technik bekannten gattungsgemäßen Innenverkleidungsteilen ist jedoch, dass eine Anbindung des Kunststoffträgers an das Metallverstärkungsteil sichtbar ist, da insbesondere z.B. nach intensiver Sonnenbestrahlung sich Aufwölbungen bzw. Nietköpfe durch eine zum Kraftfahrzeuginnenraum hin abschließende Dekorschicht abzeichnen.

Es ist daher die Aufgabe der vorliegenden Erfindung, Innenverkleidungsteile für Kraftfahrzeuge zu schaffen, welche einerseits kostengünstig in der Herstellung sind und andererseits unsichtbare Airbagdurchgangsöffnungen zeigen.

Diese Aufgabe wird durch ein Innenverkleidungsteil nach Anspruch 1 gelöst.

Dadurch, dass bei einem gattungsgemäßen Innenverkleidungsteil das Scharnierblatt des Metallverstärkungsteils und der Kunststoffträger mindestens eine Ausnehmung sowie hierzu korrespondierend mindestens ein diese Ausnehmung hintergreifendes Fixierelement zur Kopplung von Scharnierblatt und Trägerteil enthält, wobei zwischen dem Innenrand der Ausnehmung und dem Fixierelement ein Spalt zum Wärmedehnungsausgleich zwischen Fixierelement und Ausnehmung gegeben ist, wird diese Aufgabe gelöst.

Hierbei sind verschiedene Ausführungsformen denkbar. So ist es möglich, dass das Scharnierblatt lochförmige Ausnehmungen aufweist, in welche stiftförmig hintergreifende Fixierelemente des Trägerteils eingreifen. Selbstverständlich ist es in einer Abwandlung hierzu auch möglich, dass eine Umkehr dieser Verhältnisse gegeben ist, d.h. dass die Fixierelemente an dem Scharnierblatt angeordnet sind und in Ausnehmungen des Kunststoffträgerteils eingreifen. Selbstverständlich sind auch Mischformen möglich.

Erfindungsgemäß wird in jedem Fall erreicht, dass der "Bimetalleffekt", welcher z.B. für ein Aufwölben des Kunststoffträgers bei starker Erhitzung verantwortlich ist, beseitigt wird. Dieser rührt daher, dass z.B. Kunststoff (also der Kunststoffträger) ein anderes Wärmeausdehnungsverhalten zeigt als Metall, so dass es üblicherweise, z.B. bei angenieteten Bauteilen, bei Erwärmung zwangsweise zu einer unterschiedlich starken Verformung beider Bauteile kommen muss. Dies wird von vornherein erfindungsgemäß verhindert, da ausreichend Wärmeausdehnungsbereiche vorgesehen sind.

Erfindungsgemäß ist es somit insbesondere für PVCfolienkaschierte Instrumententafeln möglich, unsichtbare Airbagöffnungen bereitzustellen. Durch die fliegende Lagerung des Airbagscharnierbleches zur Airbagklappe wird der Bimetalleffekt entkräftet, der sich bei Klimawechsel von -40 Grad Celsius bis +80 Grad Celsius unvermeidlich durch den um das 10-fache höheren Ausdehnungskoeffizienten von Kunststoff gegenüber Metall einstellen würde. Trotz der "erfindungsgemäßen fliegenden Lagerung" ist die Verbindung gewährleistet und ein Ablösen der Klappe vom Scharnierblech beim Airbagschuss nicht möglich. Der Bimetalleffekt würde unweigerlich im Kälte-Wärme-Test von invisibel gewünschter Airbagkontur zur visiblen, von Fahrzeugherstellern unerwünschten Airbag-Konturen führen. Dieser Bimetall würde sich insbesondere bei einer Kaschierung mit PVC-Schaumfolie auswirken. Somit ist erfindungsgemäß eine absolute Unsichtbarkeit der Airbagöffnung von Tieftemperaturen von -40 Grad Celsius bis Hochtemperaturen im Fahrzeug bis +85 Grad Celsius möglich.

Vorteilhafte Weiterbildungen der vorliegenden Erfindung werden in den abhängigen Ansprüchen beschrieben.

Eine vorteilhafte Weiterbildung sieht vor, dass der Kunststoffträger den Airbagkanal voll überdeckt. Hierdurch wird gewährleistet, dass im Normalzustand ein weitreichender Schutz des darunter liegenden Airbagmoduls gewährleistet ist. Hierbei kann der Kunststoffträger um den Airbagaustrittskanal herum eine Sollbruchlinie (vorzugsweise unterhalb der von den Fahrzeuginsassen sichtbaren Dekorschicht, z.B. auf der Rückseite des Kunststoffträgers) aufweisen, um eine Unsichtbarkeit des Airbagkanals zu garantieren. Hierzu bietet es sich außerdem an, dass das Scharnierblatt des Metallverstärkungsteils auf der dem Kraftfahrzeug-Innenraum abgewandten Seite des Kunststoffträgers aufgebracht ist. Der Kunststoffträger kann je nach gewünschter Optik bzw. Haptik auf der zu dem Kraftfahrzeuginnenraum hinweisenden Seite mit Schaum und/oder einem Dekorfilm belegt sein. Das Dekor kann z.B. aus Leder oder einem Kunststoff wie PVC sein, auch kann eine entsprechende PVC-Schaumfolie mit z.B. 1,5 mm Dicke aufgebracht sein, um auf kostengünstige Weise eine angenehme Haptik und eine gute Optik zu erzielen, hierzu ist z.B. die Kaschierung mit einer PVC-Schaum-Folie Nr. 34 Dicke 2,5 mm Bayblend T85 möglich.

Der Kunststoffträger kann vorzugsweise auch mehrschichtig ausgeführt sein. Hierzu weist der Kunststoffträger z.B. auf der zum Kraftfahrzeug-Innenraum hinweisenden Seite eine vorzugsweise durchgehende Schichtung von Schaum und/oder weiteren Dekorschichten auf. Hierunter kann der Kunststoffträger ein weiteres Teil aufweisen, welches primär der Stabilität dient. Dieses Teil besteht z.B. aus ABS bzw. ABS/PC und ist 0,5 bis 3 mm, vorzugsweise 2 bis 3 mm, am besten 2,5 mm stark. Hiermit wird gewährleistet, dass der Kunststoffträger selbsttragend ist.

Das Metallverstärkungsteil kann ein Metallblech mit einer Stärke von 0,5 bis 1,5 mm, vorzugsweise 0,7 bis 0,9 mm sein. Als Material kommt insbesondere ziehfähiges Metallblech, z.B. "Dosenblech) Material DX 50) in Frage. Mit diesen Materialen für das Metallverstärkungsteil wird gewährleistet, dass eine ausreichende Stabilität der Überbrückung des Airbagdurchgangskanals einerseits gegeben ist und andererseits eine gesicherte Scharnierfunktion bei einem Airbagdurchtritt gegeben ist.

Das Metallverstärkungsteil kann auf verschiedene Arten ausgeführt sein. Für die Stabilität ist es insbesondere vorteilhaft, dass das Metallverstärkungsteil rahmenförmig ist mit einem zentralen, über eine Biegekante mit dem Rahmen verbundenen, Scharnierblatt. Zur Verbesserung des definierten Aufreißverhaltens ist es hierbei sinnvoll, das rahmenförmige Metallverstärkungsteil im Randbereich mit dem Kunststoffträger zusätzlich zu verbinden, es hat sich gezeigt, dass hierbei eine fliegende Lagerung nicht unbedingt notwendig ist. Es hat sich gezeigt, dass für die Anzahl der Ausnehmungen 1-10 Ausnehmungen, vorzugsweise 6-9 Ausnehmungen (je nach Größe und Anordnung des Airbags) sinnvoll sind. Bei einer bevorzugten Ausführungsform, bei welcher ein Kunststoffträger zum Innenraum hin eine "Dekorfläche" mit einer z.B. PVC-Schaumfolie und darunter einen aus Stabilitätsgründen härteren Kunststoff, z.B. ABS aufweist, ist es z.B. möglich, die fliegende Lagerung zwischen Scharnierblatt und Kunststoffträger nur im Bereich der Dekorfläche vorzusehen. Das heißt, dass der "stabilitätsbildende" Teil des Kunststoffträgers in diesem Bereich ausgespart ist und hier voll durch das Scharnierblatt überbrückt wird. Die "fliegende" Lagerung findet jeweils zwischen Ausnehmungen (Löchern) des Scharnierblattes sowie Kunststoff-Domen, welche aus der Dekorfläche auf der vom Innenraum angewandten Seite herausragen und diese Ausnehmungen hintergreifen, statt. Hierdurch ist einerseits eine stabile, andererseits aber auch eine leichtbauende und definiert aufzureißende Airbagklappe gegeben, welche außerdem unsichtbar darstellbar ist.

Es hat sich insbesondere gezeigt, dass es vorteilhaft ist, die Ausnehmungen langlochförmig bzw. oval auszuführen und die Fixierelemente hierzu korrespondierend im Querschnitt zu gestalten, da hier das Wärmeausdehnungsverhalten besonders günstig scheint. In einer Abwandlung hierzu ist es möglich, dass die Ausnehmungen in ihrem Innenrandbereich eine Stufung aufweist. Eine weitere vorteilhafte Weiterbildung sieht vor, dass zwischen Ausnehmung und Fixierelement lediglich, in einer Ebene Spiel zur Wärmeausdehnung gegeben ist. Dies bedeutet z.B., dass bei einem Fixierelement, welches z.B. als die Ausnehmung -hintergreifender "Dom" ausgeführt ist, der Hintergriff so stattfindet, dass bei Normaltemperaturen der hintergreifende Abschnitt in Achsrichtung des Doms spannungsfrei (aber spaltlos) aufliegt. Dies stellt auch bei stärkeren Temperaturschwankungen kein Problem dar, da die Hauptwärmeausdehnung in der zu dieser Achsrichtung senkrechten Flächenebene stattfindet. Es ist günstig, lediglich ein Spiel in einer Ebene vorzusehen, um ein eventuelles Klappern der Bauteile aneinander, welches ungewünschte Geräusche erzeugen könnte, zu verhindern.

Die Fixierelemente können prinzipiell beliebige, Öffnungen hintergreifende Elemente sein. So können es z.B. integral an z.B. dem Kunststoffträger angeformte Kunststoffdome sein. Diese werden z.B. um ihre hintergreifende Form herzustellen angeschmolzen oder ultraschallverschweißt, so dass sich eine, die Ausnehmungen hintergreifende "Pilzform" herstellen lässt.

Es ist selbstverständlich auch möglich, dass die Fixierelemente gesonderte Bauteile sind, welche den übrigen Kunststoffträger bzw. Teile dessen hintergreifen. Dies können z.B. Schrauben aus Metall oder Kunststoff sein. Der Hintergriff kann hier z.B. auch durch zusätzliche Muttern hergestellt werden, auch eine Vernietung (allerdings mit Spaltraum in der Fläche) ist denkbar.

Prinzipiell ist die Erfindung für sämtliche Innenverkleidungsteile in Kraftfahrzeugen anwendbar, unabhängig davon, ob das eine Instrumententafel, eine Seitenverkleidung oder z.B. der Kopfraumbereich eines Kraftfahrzeuges ist.

Weitere vorteilhafte Weiterbildungen der vorliegenden Erfindung werden in den übrigen abhängigen Ansprüchen erläutert. Die Erfindung wird nun anhand mehrerer Figuren erläutert. Es zeigen:
- Figur 1: die Ansicht eines erfindungsgemäßen Innenverkleidungsteils vom Kraftfahrzeuginneren aus;
- Figur 2: Komponenten eines mehrteiligen Kunststoffträgers;
- Figur 3: die Komponenten nach Figur 2 in gefügter Form:
- Figur 4: ein Teil eines erfindungsgemäßen Kunststoffträgers mit einem erfindungsgemäßen Metallverstärkungsteil;
- Figur 5: eine Ansicht eines erfindungsgemäßen Innenverkleidungsteils nach Figur 1 von der dem Kraftfahrzeuginnenraum abgewandten Seite aus gesehen; sowie
- Figur 6: einen Schnitt durch das Innenverkleidungsteil nach Figur 5 gemäß A-A.

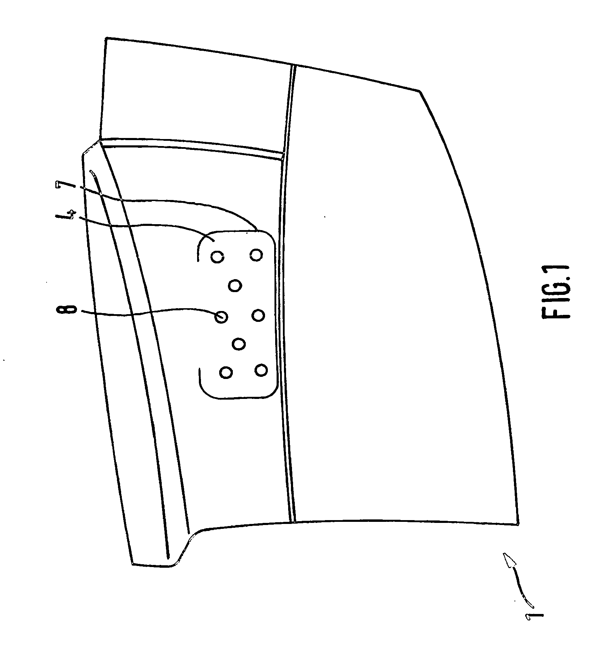

Figur 1 zeigt ein erfindungsgemäßes Innenverkleidungsteil 1 vom Innenraum eines Kraftfahrzeuges aus gesehen. Dieses Innenverkleidungsteil besitzt ein für die Fahrzeuginsassen normalerweise "unsichtbares" Airbagsystem. Allein zur Erläuterung sind daher in Figur 1 eine Sollbruchlinie 7 des Innenverkleidungsteils (welche z.B. rückseitig angebracht ist und somit unsichtbar) und erfindungsgemäße Paarungen von Fixierelementen und Ausnehmungen vorgesehen, welche in Figur 1 als insgesamt acht Punkte (siehe Bezugsziffer "8") ausgeführt sind, auf welche später nochmals detaillierter eingegangen wird und welche normalerweise ebenfalls nicht vom Fahrzeugsinnenraum her sichtbar sind. Die Sollbruchlinie 7 bildet den äußeren Umriss eines Airbagkanals 4 für den Durchtritt eines Airbags in den Kraftfahrzeuginnenraum. Das in Figur 1 gezeigte Innenverkleidungsteil ist Teil einer Instrumententafel eines modernen Kraftfahrzeuges.

Im folgenden wird der Aufbau eines Kunststoffträgers, welcher in dem Innenverkleidungsteil enthalten ist, erläutert.

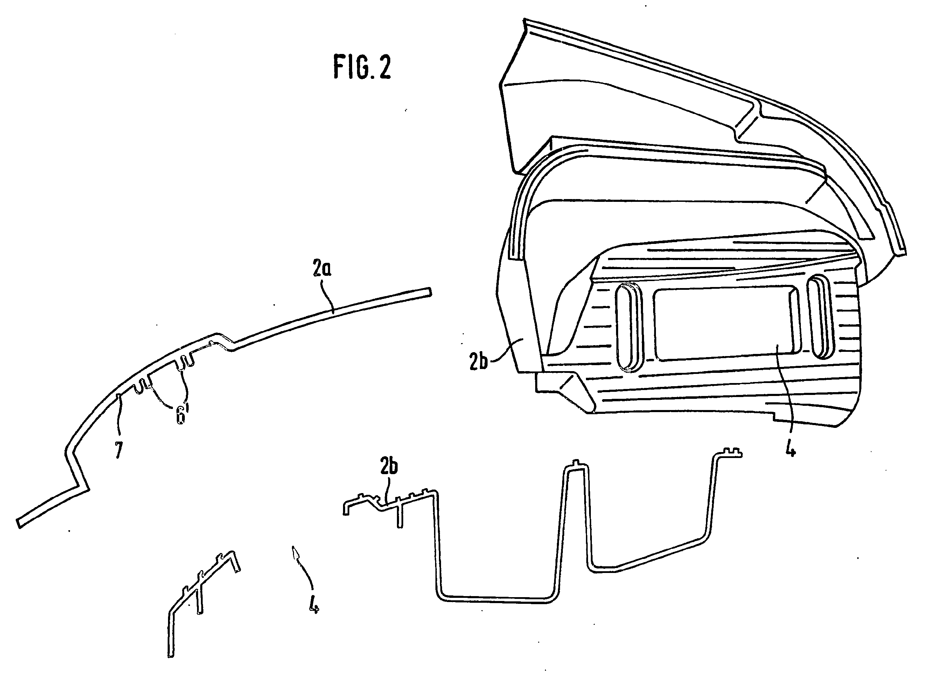

Figur 2 zeigt Elemente eines zweiteiligen Kunststoffträgers. Dieser weist zunächst ein unteres, primär der Stabilität und Verbindungssteifigkeit Teil 2b auf. Dieses Teil 2b ist einmal (unten) im Querschnitt dargestellt. Hierbei ist deutlich zu sehen, dass im Bereich des Airbagkanals 4 ein Durchbruch gegeben ist. Dies ist auch nochmals bei der anderen Ansicht des Teils 2b zu sehen, welches oben rechts in Figur 2 gezeigt ist. Auch hier ist ein Airbagdurchgangskanal 4 gezeigt. Auf der Oberfläche in der Darstellung oben rechts des Teils 2b sind linienförmige Verläufe entlang der oberen Fläche dieses Teiles 2b zu sehen. Diese Teile dienen der besseren Fixierung eines auf das Teil 2b (vorzugsweise mittels Verschmelzung (z.B. Ultraschall-Verschmelzung, oder auch über Verklebung) aufzubringenden Teils 2a, welches oben links in Figur 2 gezeigt ist. Das Teil 2b besteht aus einem stabilen Kunststoff, z.B. aus ABS und ist z.B. 2,5 mm stark.

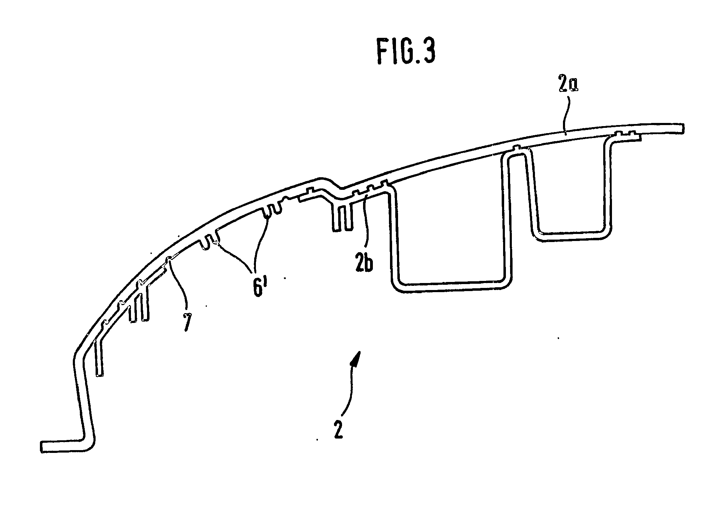

Auf das Teil 2b wird das Teil 2a gelegt. Hierbei handelt es sich um eine PVC-Schaumfolie, welche zum Kraftfahrzeuginnenraum hin (also nach oben links hin in Figur 2) eine glatte Folie aufweist, welche von einem Schaum unterfüttert ist. Selbstverständlich sind auch weitere Ausbildungen möglich, z.B. dass eine zusätzliche Dekorierung mit Leder etc. gegeben ist oder auch eine Ausschäumung, um eine noch dickere Schaumschicht herzustellen. Die Teile 2a und 2b werden so gefügt, dass sich der in Figur 3 gezeigte Kunststoffträger 2 ergibt. Hierbei.ist bereits jetzt darauf hinzuweisen, dass die in Figur 1 angedeutete Sollbruchlinie 7 sich im Randbereich des Airbagkanals 4 befindet und das "Domrohlinge" 6' vorgesehen sind, welche nach der späteren Verschmelzung ihrer Enden erfindungsgemäße Fixierelemente bilden werden.

Der in Figur 3 gezeigte Kunststoffträger 2 weist eine Form auf, welche beliebige konstruktive Ansprüche erfüllt. Die in Figur 3 gezeigte Ausführungsform stellt eine Instrumententafel dar. Hierzu können insbesondere in dem unteren Teil 2b zusätzliche Kanäle, etwa zu Luftführung, vorgesehen werden.

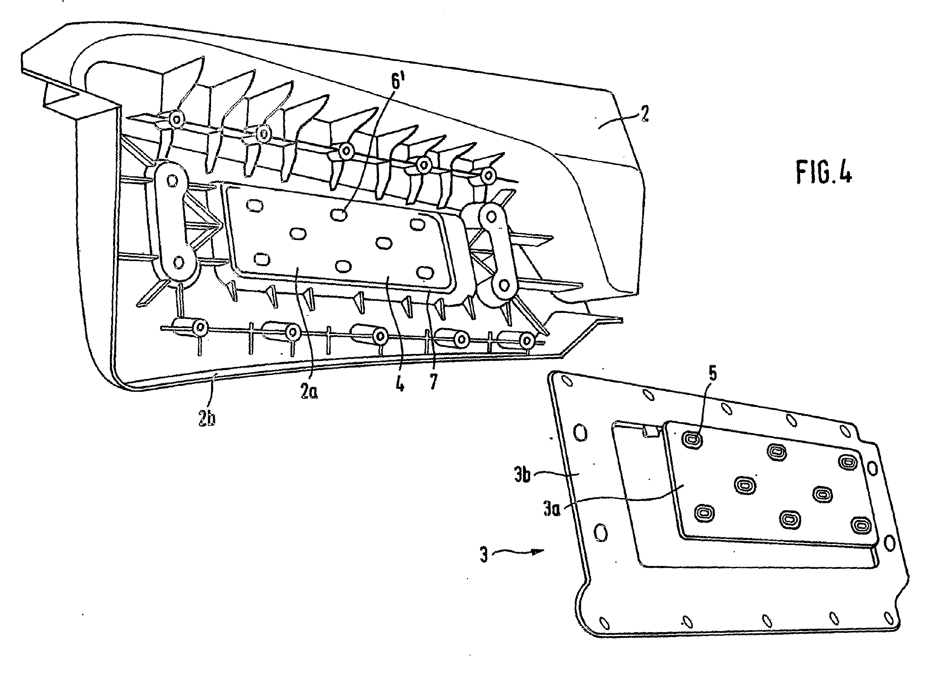

Figur 4 zeigt nochmals einen Ausschnitt des Kunststoffträgers 2 von seiner "Rückseite", also von der im Einbauzustand vom Kraftfahrzeuginnenraum abweisenden Seite aus. Hier ist zu sehen, dass der Airbagkanal 4 durch das Teil 2a verschlossen ist. Außerdem sind die "Domrohlinge" 6' zu sehen. Auf diese Domrohlinge wird ein Scharnierblatt 3a mit Ausnehmungen 5 aufgesetzt, wie es in Figur 4 zu sehen ist. Die Ausnehmungen 5 des Scharnierblattes 3a sind korrespondierend in der Form zu den Domrohlingen 6'. Das Scharnierblatt gehört zu einem Metallverstärkungsteil 3, welches rahmenförmig ist mit einem zentral angeordneten Scharnierblatt 3a. Das Metallverstärkungsteil weist außerdem in seinem Randbereich 3b Löcher auf, welche der Fixierung dieses Randbereichs an der Rückseite des Kunststoffträgers 2 in entsprechen Aufnahmen dienen. Bei dem Metallverstärkungsteil handelt es sich um ein tiefgezogenes Metallblechteil (Dosenblech), welches eine durchgehende Stärke von 0,8 mm aufweist. Das Metallverstärkungsteil (bzw. das Scharnierblatt) werden auf der einem KraftfahrzeugInnenraum abgewandten Seite des Kunststoffträgers 2 angebracht, wobei zumindest der Teil 2a des Kunststoffträgers den Airbagkanal 4 überdeckt.

Es ist darauf zu achten, dass das Metallverstärkungsteil 3 sowie der Kunststoffträger 2 sowie geformt sind, dass das Scharnierblatt 3a in der verbundenen Stellung von Metallverstärkungsteil 3 und Kunststoffträger 2 eine flächige Unterstützung des Abschnittes 2a bietet, welcher den Airbagkanal 4 überdeckt. Nur hierdurch kommt es dann zu dem gewünschten unsichtbaren Erscheinungsbild, da das Scharnierblatt 3a sich somit der Gesamtkontur des Innenverkleidungsteils 1 anschließt.

Nachfolgend zu Figur 4 erfolgt eine Verschmelzung der Domrohlinge 6', so dass diese die Ausnehmungen 5 des Metallverstärkungsteils 3 bzw. des Scharnierblattes 3a hintergreifen.

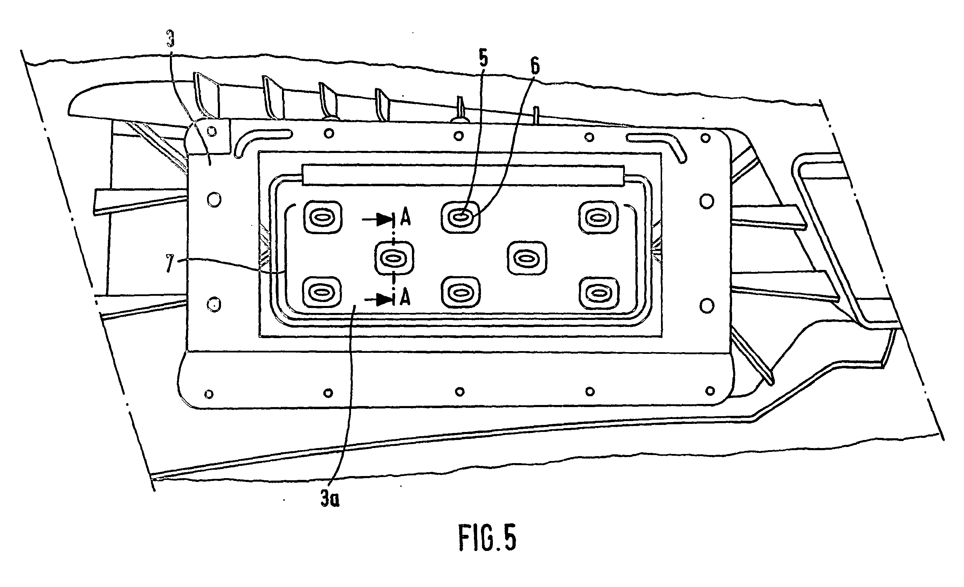

Dieser Zustand wird in Figur 5 gezeigt. Es ist deutlich zu sehen, wie bei den 8 Ausnehmungen 5 jeweils in der Form komplementäre (aber kleiner bemessene) Fixierelemente 6 eingreifen.

Die Herstellung dieses Hintergriffs kann durch Ultraschall-Schweißen oder auch durch Wärmeverschmelzen der Domrohlinge 6' stattfinden. Selbstverständlich ist es in anderen Ausführungsformen auch möglich, hier externe Bauteile, etwa Schrauben aus Metall oder Kunststoff zu verwenden. In Figur 5 ist besonders gut zu sehen, dass die Fixierelemente 6 eine ovale Querschnittsstruktur haben. Dies ist besonders vorteilhaft für das erwünschte Wärmeausdehnungsverhalten, da hier eine großflächige Ankopplung von Kunststoffträger und Scharnierelement einerseits erreicht wird, aber trotzdem keine vollflächige Verklebung, welche zu Aufwölbungen bei Temperaturwechseln kommen könnte.

In Figur 5 weist das Scharnierblatt 3a in dem Randbereich der Ausnehmungen 5 eine "Stufung" zu dem Kunststoffträgerteil 2a hin.

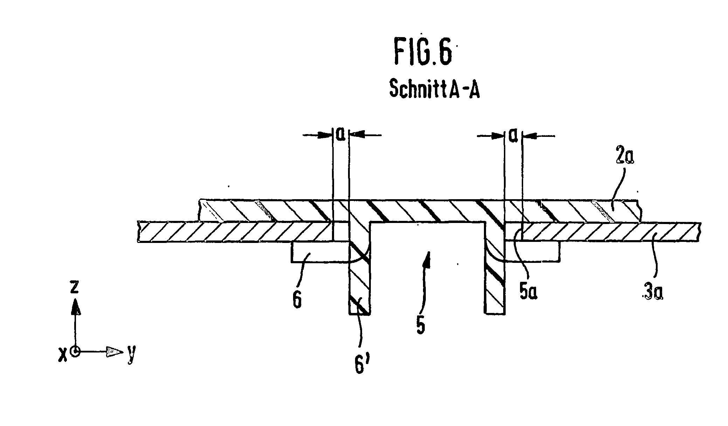

Der wesentliche Aspekt der "fliegenden" Lagerung ist bisher in den Zeichnungen nicht direkt absehbar gewesen. Daher wird zur Erläuterung dieses Umstandes (welcher bei sämtlichen Ausführungsformen vorliegend gegeben ist) der Schnitt A-A in Figur 6 erläutert. Aus Gründen der Einfachheit wurde jedoch gegenüber der Schnittführung in Figur 5 die Stufung des Randbereichs der Ausnehmung 5 nicht gezeigt.

In Figur 6 sind zwei Zustände des Kunststoffträgers 2 bzw. dessen Teils 2a gezeigt. Zum einen ist senkrecht nach unten stehend ein Domrohling 6' zu sehen, welcher in einer Ausnehmung 5 gesteckt ist. Anschließend an ein Ultraschall-Verschweißen ist die fertige Ausbildung des Fixierelementes zu sehen. Hierbei werden die Enden der Domrohlinge 6' so umgeformt, dass diese die Ausnehmungen 5 umlaufend hintergreifen und somit das Scharnierblatt 3a fixieren. In der hier gezeigten Ausbildung ist die Umformung zu erfolgt, dass in Achsenrichtung des Fixierelements bzw. des Domrohlings (also in Z-Richtung) das Fixierelement direkt anliegt.

Demgegenüber ist aber in der X-Y-Ebene ein Spaltraum zwischen der Außenkontur des Fixierelements 6 und dem Innenrand der Ausnehmung 5a gegeben. Dieser Spalt in der "Flächenebene", also der X-Y-Ebene sorgt dafür, dass erfindungsgemäß ein Wärmeausdehnungsausgleich zwischen Fixierelement und Ausnehmung gegeben ist, so dass sich keine Auswölbung des Teils 2a, z.B. in Richtung Z ergeben kann.

Es ist somit in den vorangegangenen Ausführungsbeispielen jeweils ein Innenverkleidungsteil 1 gezeigt für Kraftfahrzeuge, welches einen Kunststoffträger 2 sowie ein damit verbundenes, mit einem Scharnierblatt 3a zur zumindest bereichsweisen Überbrückung eines Airbagdurchgangskanals 4 versehenes, Metallverstärkungsteil 3 aufweist. Das Scharnierblatt 3a und der Kunststoffträger 2 weisen mindestens eine Ausnehmung 5 sowie mindestens ein diese Ausnehmung 5 hintergreifendes Fixierelement 6 zur Kopplung von Scharnierblatt und Trägerteil auf. Es ist gut zu sehen, insbesondere in Figur 6, dass zwischen dem Innenrand 5a der Ausnehmung sowie dem Fixierelement 6 ein Spalt a zum Wärmedehnungsausgleich zwischen Fixierelement und Ausnehmung gegeben ist. Die Größe dieses Spaltes ist vorzugsweise zwischen 0,2 und 2 mm, vorzugsweise zwischen 0,4 und 1,5 mm, besonders vorzugsweise zwischen 0,4 und 0,8 mm.

Besonders vorteilhaft ist, dass nach der vorliegenden Erfindung eine unabhängig von den Temperaturgegebenheiten auch langfristig unsichtbare Airbagabdeckung gegeben ist. Dies ist selbst dann der Fall, wenn das Innenverkleidungsteil zum Kraftfahrzeuginnenraum hin lediglich mit einer relativ dünnen Dekorschicht versehen ist, etwa einem PVC-, Textilstoff- oder beispielsweise auch TPO-Dekor mit darunter befindlicher dünner Schaumstoffschicht, welche dann auf das Trägerteil aufgebracht wird (die Abfolge geht also PVC-Schicht-SchaumscHicht-Kunststoffträgerteil 2a). Die Schaumstoffschicht hat hierbei vorzugsweise eine Dicke zwischen 0,5 mm und 5 mm, vorzugsweise 1 bis 3 mm.

Die Schaumstoffschicht ist hierbei nicht zwingend, verbessert aber einen "Soft Touch"-Effekt. Wesentlich ist, dass zur Kostenminimierung (bei Beibehaltung eines hochwertigen optischen Eindruckes) sehr dünne Dekore verwendet werden können. Dies sind vorzugsweise bereits fertiggestellte Dekore, d.h. solche, welche nicht nochmals in einem chemischen Prozess hinterschäumt werden müssen, um so eine dicke Schaumschicht zu erzeugen. Bei der vorliegenden Erfindung können also praktisch beliebige dünnere Dekorschichten zum Einsatz kommen, so lange diese einen qualitativ ausreichend hochwertigen Eindruck vermitteln. Die oben genannte Materialaufzählung ist hierbei lediglich beispielhaft zu verstehen, wesentlich ist eine geringe Dicke des Gesamtdekors (wenn dieses mehrschichtig ist, einschließlich zum Beispiel Schaumschicht etc.). Die Gesamtdicke des Dekors (einschließlich aller Schichten, etwa der Schaumstoffschicht) beträgt hierbei vorzugsweise maximal 5 mm, besonders vorzugsweise maximal 3 mm, ganz besonders vorzugsweise maximal 2 mm.

Dies ist ein bedeutender Unterschied zu den bestehenden "geschäumten" Ausführungsformen, bei denen etwa ein Polyurethan-Schaum in einem chemischen Prozess in größerer Dicke hergestellt wird.

Die Anmelderin hat aufgrund ihrer andauernden Marktbeobachtung die Kenntnis erlangt, dass es bisher noch nicht möglich war, "unsichtbare" Airbagabdeckungen herzustellen bei Einsatz relativ dünner Dekore, so dass die vorliegende Erfindung hier erstmals eine Möglichkeit bietet, eine "unsichtbare" Airbagabdeckung auch bei Temperaturschwankungen zu erreichen.

## Patentansprüche

1. Innenverkleidungsteil (1), insbesondere für Kraftfahrzeuge, welches einen Kunststoffträger (2) sowie ein damit verbundenes, mit einem Scharnierblatt (3a) zur zumindest bereichsweisen Überbrückung eines Airbagdurchgangskanals (4) versehenes, Metallverstärkungsteil (3) aufweist, **dadurch gekennzeichnet, dass** das Scharnierblatt und der Kunststoffträger sowie mindestens eine Ausnehmung (5) mindestens ein diese Ausnehmung hintergreifendes Fixierelement (6) zur Kopplung von Scharnierblatt und Trägerteil enthält, **dadurch gekennzeichnet dass**, zwischen dem Innenrand (5a) der Ausnehmung und dem Fixierelement ein Spalt (a) zum Wärmedehnungsausgleich zwischen Fixierelement und Ausnehmung gegeben ist.

2. Innenverkleidungsteil nach Anspruch 1, **dadurch gekennzeichnet, dass** der Kunststoffträger (2) den Airbagkanal (4) überdeckt.

3. Innenverkleidungsteil nach Anspruch 2, **dadurch gekennzeichnet, dass** der Kunststoffträger (2) um den Airbagkanal herum eine Sollbruchlinie (7) aufweist.

4. Innenverkleidungsteil nach einem der Ansprüche 2 oder 3, **dadurch gekennzeichnet, dass** das Scharnierblatt (3a) auf der einem Kraftfahrzeug-Innenraum abgewandten Seite des Kunststoffträgers angebracht ist.

5. Innenverkleidungsteil nach einem der Ansprüche 2 bis 4, **dadurch gekennzeichnet, dass** der Kunststoffträger (2) auf der zu einem Kraftfahrzeug-Innenraum hinweisenden Seite Schaum und/oder weitere Dekorschichten aufweist.

6. Innenverkleidungsteil nach einem der vorhergehenden Ansprüche, **dadurch gekennzeichnet, dass** der Kunststoffträger zumindest teilweise aus ABS ist und dort 0,5 bis 3 mm, vorzugsweise 2 bis 3 mm, besonders vorzugsweise 2,5 mm, stark ist.

7. Innenverkleidungsteil nach einem der vorhergehenden Ansprüche, **dadurch gekennzeichnet, dass** das Metallverstärkungsteil (3) 0,5 bis 1,5 mm, vorzugsweise 0,7 bis 0,9 mm stark ist.

8. Innenverkleidungsteil nach einem der vorhergehenden Ansprüche, **dadurch gekennzeichnet, dass** das Metallverstärkungsteil (3) rahmenförmig ist mit einem zentral angeordneten Scharnierblatt (3a).

9. Innenverkleidungsteil nach Anspruch 8, **dadurch gekennzeichnet, dass** das rahmenförmige Metallteil (3) zusätzlich mit dem Kunststoffträger im Randbereich (3b) des rahmenförmigen Metallteils verbunden ist.

10. Innenverkleidungsteil nach einem der vorhergehenden Ansprüche, **dadurch gekennzeichnet, dass** 1 bis 10 Ausnehmungen, vorzugsweise 6 bis 9 Ausnehmungen vorgesehen sind.

11. Innenverkleidungsteil nach einem der vorhergehenden Ansprüche, **dadurch gekennzeichnet, dass** die Ausnehmungen (5) langlochförmig sind und die Fixierelemente (6) hierzu eine korrespondierende Form aufweisen.

12. Innenverkleidungsteil nach einem der vorhergehenden Ansprüche, **dadurch gekennzeichnet, dass** die Ausnehmungen (5) in ihrem Randbereich eine Stufung aufweisen.

13. Innenverkleidungsteil nach einem der vorhergehenden Ansprüche, **dadurch gekennzeichnet, dass** zwischen Ausnehmung (5) und Fixierelement (6) lediglich in einer Ebene Spiel zur Wärmeausdehnung gegeben ist.

14. Innenverkleidungsteil nach einem der vorhergehenden Ansprüche, **dadurch gekennzeichnet, dass** das Fixierelement (6) ein zu dem Kunststoffträger gehörender Kunststoffdom ist.

15. Innenverkleidungsteil nach einem der Ansprüche 1 bis 15, **dadurch gekennzeichnet, dass** die Fixierelemente (6) gesonderte Bauteile sind, welche den übrigen Kunststoffträger hintergreifen.

16. Innenverkleidungsteil nach einem der vorhergehenden Ansprüche, **dadurch gekennzeichnet, dass** dies eine Instrumententafel, eine Seitenverkleidung oder dergleichen eines Kraftfahrzeuges ist.

## Claims

1. Inner trim part (1), particularly for a vehicle, which has a plastic carrier (2) as well as a metal reinforcement part (3) which is connected with the plastic carrier and which is equipped with a hinge plate (3a) which at least partly bridges an airbag passage channel (4), **characterised in that** the hinge plate and the plastic carrier as well as at least one recess comprises at least one fixing element (6) for the coupling of the hinge plate and the carrier part that engages with this recess, **characterised in that** there is a gap (a) between the inner edge (5a) of the recess and the fixing element for the compensation of the thermal extension between the fixing element and the recess.

2. Inner trim part according to claim 1, **characterised in that** the plastic carrier (2) covers the airbag channel (4).

3. Inner trim part according to claim 2, **characterised in that** the plastic carrier (2) has a rated break line (7) around the airbag channel.

4. Inner trim part according to one of the claims 2 or 3, **characterised in that** the hinge plate (3a) is fixed on the side of the plastic carrier that is opposite the vehicle interior.

5. Inner trim part according to one of the claims 2 to 4, **characterised in that** the plastic carrier (2) has foam and/or further decor layers on the side that faces the vehicle interior.

6. Inner trim part according to one of the previous claims, **characterised in that** the plastic carrier is at least partly made of ABS and is 0.5 to 3 mm thick there, preferably 2 to 3 mm, in particular preferably 2.5 mm.

7. Inner trim part according to one of the previous claims, **characterised in that** the metal reinforcement part (3) is 0.5 to 1.5 mm thick, preferably 0.7 to 0.9 mm.

8. Inner trim part according to one of the previous claims, **characterised in that** the metal reinforcement part (3) is shaped as a frame and that the hinge plate (3a) is positioned in its centre.

9. Inner trim part according to claim 8, **characterised in that** the frame-shaped metal part (3) is in addition connected with the plastic carrier in the border area (3b) of the frame-shaped metal part.

10. Inner trim part according to one of the previous claims, **characterised in that** 1 to 10, preferably 6 to 9, recesses are planned.

11. Inner trim part according to one of the previous claims, **characterised in that** the recesses (5) are oblong holes and the fixing elements (6) are correspondingly.

12. Inner trim part according to one of the previous claims, **characterised in that** the recesses (5) have a stepping in their border area.

13. Inner trim part according to one of the previous claims, **characterised in that** there is space for thermal expansion between the recess (5) and the fixing element (6) in one level only.

14. Inner trim part according to one of the previous claims, **characterised in that** the fixing element (6) is a plastic dome that belongs to the plastic carrier.

15. Inner trim part according to one of the claims 1 to 15, **characterised in that** the fixing elements (6) are separate parts which engage with the rest of the plastic carrier.

16. Inner trim part according to one of the previous claims, **characterised in that** this is an instrument panel, a side panel or suchlike of a vehicle.

## Revendications

1. Elément d'habillage intérieur (1), en particulier pour véhicules automobiles, qui comprend une potence plastifiée (2) ainsi qu'une pièce de renfort métallique (3) qui est connectée avec celle-ci et qui a une lame de charnière (3a), afin de ponter au moins partiellement un canal de passage d'airbag, **caractérisé en ce que** la lame de charnière et la potence plastifié ainsi qu'au moins une évidement comprend au moins un élément de fixation (6) qui engrène cette évidement afin de coupler la lame de charnière et l'élément de potence, **caractérisé en ce qu'**il y a une fente (a) pour la compensation de l'extension thermique entre l'élément de fixation et l'évidement entre le bord intérieur (5a) de l'évidement et l'élément de fixation.

2. Elément d'habillage intérieur selon la revendication 1, **caractérisé en ce que** la potence plastifiée (2) couvre le canal d'airbag (4).

3. Elément d'habillage intérieur selon la revendication 2, **caractérisé en ce que** la potence plastifiée (2) a une ligne destinée à la rupture (7) autour du canal d'airbag.

4. Elément d'habillage intérieur selon une des revendications 2 ou 3, **caractérisé en ce que** la lame de charnière (3a) est fixée au côté de la potence plastifiée qui est opposé à l'intérieur du véhicule automobile.

5. Elément d'habillage intérieur selon une des revendications 2 à 4, **caractérisé en ce que** la potence plastifiée (2) a mousse et/ou outres stratifiés de décor au côté qui est tourné vers l'intérieur du véhicule automobile.

6. Elément d'habillage intérieur selon une des revendications préalables, **caractérisé en ce que** la potence plastifié est au moins partiellement fait de ABS et y a une épaisseur de 0,5 à 3 mm, de préférence 2 à 3 mm, de préférence particulière 2,5 mm.

7. Elément d'habillage intérieur selon une des revendications préalables, **caractérisé en ce que** la pièce de renfort métallique (3) a une épaisseur de 0,5 à 1,5 mm, de préférence 0,7 à 0,9 mm.

8. Elément d'habillage intérieur selon une des revendications préalables, **caractérisé en ce que** la pièce de renfort métallique (3) est conçue en forme de cadre avec une lame de charnière (3a) centralisée.

9. Elément d'habillage intérieur selon la revendication 8, **caractérisé en ce que** la pièce de renfort métallique conçue en forme de cadre (3) est, en plus, connexe à la potence plastifiée au niveau du bord (3b) de la pièce de renfort métallique conçue en forme de cadre.

10. Elément d'habillage intérieur selon une des revendications préalables, **caractérisé en ce que** 1 à 10 évidements, de préférence 6 à 9 évidements, sont prévues.

11. Elément d'habillage intérieur selon une des revendications préalables, **caractérisé en ce que** les évidements (5) sont formées comme trous oblongs et que les éléments de fixation (6) ont une forme correspondante.

12. Elément d'habillage intérieur selon une des revendications préalables, **caractérisé en ce que** les évidements (5) sont étagées au niveau du bord.

13. Elément d'habillage intérieur selon une des revendications préalables, **caractérisé en ce qu'**il y a espace pour dilatation thermique entre l'évidement (5) et l'élément de fixation (6) dans un plan seulement.

14. Elément d'habillage intérieur selon une des revendications préalables, **caractérisé en ce que** l'élément de fixation (6) est un coupole en plastique qui appartient à la potence plastifiée.

15. Elément d'habillage intérieur selon une des revendications 1 à 15, **caractérisé en ce que** les éléments de fixation sont parties séparées qui engrènent avec le reste de la potence plastifiée.

16. Elément d'habillage intérieur selon une des revendications préalables, **caractérisé en ce que** c'est une planche de bord, un élément d'habillage latérale ou quelque chose similaire dans une véhicule automobile.
